# EUROPÄISCHE PATENTANMELDUNG

(11) **EP 3 708 473 A1**
(43) Veröffentlichungstag der Anmeldung: **16.09.2020**
(21) Anmeldenummer: 20160801.5
(22) Anmeldetag: 03.03.2020
(51) Int. Cl.: B62D 55/28

(54) **STEIGHILFE**

(30) Priorität: 13.03.2019 AT 502122019
(71) Anmelder: Hettegger, Rupert, 5611 Grossari (AT)
(72) Erfinder: Hettegger, Rupert, 5611 Grossari (AT)
(74) Vertreter: Fabian, Ferdinand

(57) **Zusammenfassung**

Die Erfindung betrifft eine Steighilfe (1) für eine Maschine mit einer Raupenkette (2), umfassend ein erstes und ein zweites Winkelelement (10, 11), wobei die beiden Winkelelemente (10, 11) mit einem Verbindungselement (12) miteinander verbunden sind, dadurch gekennzeichnet, das beweglich miteinander verbundene Elemente (13) umfasst oder daraus besteht.

## Beschreibung

Die Erfindung betrifft eine Steighilfe für eine Maschine mit einer Raupenkette, umfassend ein erstes und ein zweites Winkelelement, wobei die beiden Winkelelemente mit einem Verbindungselement miteinander verbunden sind.

Weiter betrifft die Erfindung eine Maschinen-Raupenkette, die eine Oberseite aufweist, wobei die Oberseite eine Profilierung mit Erhebungen aufweist, sowie mit zumindest einer Steighilfe, die zwischen zwei Erhebungen der Profilierung der Oberseite angeordnet ist.

Die Bodenhaftung von Raupenfahrzeugen, wie beispielsweise Baggern, leidet bei schlechten Bodenverhältnissen bzw. steilen Geländen, weil sich die Zwischenräume zwischen den vorstehenden Querstegen der Kettenplatten der Raupenkette innerhalb kurzer Zeit mit aufgenommenem Material füllen und dann nicht mehr in den Boden eindringen, sodass sie unwirksam werden. Um diesem Umstand Rechnung zu tragen, wurden im Stand der Technik bereits Steighilfen vorgeschlagen. So ist beispielsweise aus der DE 20 2012 100 868 U1 eine Gleitschutzvorrichtung für eine Raupenkette bekannt, deren Kettenplatten vorstehende, quer zur Kettenlängsrichtung verlaufende Stege aufweisen, mit Trägern für über die Stege vorstehende Stollen zwischen je zwei benachbarten Stegen ausgewählter Kettenplatten, wobei die Träger jeweils zwei die Seitenränder der Kettenplatten umgreifende, miteinander lösbar verbundene, U-förmige Halterungen bilden. Die U-förmigen Halterungen der Träger umfassen einander in Trägerlängsrichtung der Höhe nach überlappende und im Überlappungsbereich mit gegen die zugehörige U-förmige Halterung abfallenden Keilflächen aneinanderlegende Schenkel, die im Überlappungsbereich über eine Langlochverbindung verschraubt sind.

Derartige Gleitschutzvorrichtung haben sich bewährt, wenn die Profilierung der Raupenkette und damit auch die Rillen zwischen den Stegen geradlinig verlaufen. Bei Gummilaufketten von Baumaschinen ist das aber häufig nicht der Fall, da damit eine bessere Bodenhaftung an sich ermöglicht werden soll. Derartige Gummilaufketten haben oft zwei Stollenspuren, die durch eine Längsrille getrennt sind, wobei die Stollen der beiden Stollenspuren in Längsrichtung der Gummilaufkette meist um eine halbe Stollenlänge versetzt sind. Damit sind derartige Gleitschutzvorrichtungen, wie sie aus der DE 20 2012 100 868 U1 bekannt sind, für dies Art der Gummilaufketten nicht bzw. nur beschränkt einsetzbar.

Um diesem Problem zu begegnen ist von der Trackgrip® International eine Steighilfe für Gummilaufketten mit längsversetzten Stollen mit der Bezeichnung "Ice Cleat" bekannt (https://www.trackgripinternational.com/). Diese Steighilfe weist zwei U-förmige Halterungen auf, mit denen die Steighilfe auf der Gummilaufkette befestigt wird. Die beiden Halterungen sind mit einer Art Zahnstange miteinander verbunden, wobei die Zahnstange schräg auf den Halterungen befestigt ist, sodass die beiden Halterungen in Längsrichtung versetzt sind. Doch auch diese Steighilfe ist nur beschränkt verwendbar bzw. für manche Gummilaufketten nicht verwendbar, beispielswiese mit annährend V-förmig verlaufenden Rillen zwischen den Gummistollen.

Der vorliegenden Erfindung liegt die Aufgabe zugrunde, eine Steighilfe für eine Gummilaufkette bzw. eine derartige Gummilaufkette mit einer Steighilfe für eine Baumaschine zu schaffen.

Die Aufgabe der Erfindung wird bei der eingangs genannten Steighilfe dadurch gelöst, dass das Verbindungselement beweglich miteinander verbundene Elemente umfasst oder daraus besteht.

Weiter wird die Aufgabe mit der eingangs genannten Maschinen-Raupenkette gelöst, die die erfindungsgemäße Steighilfe aufweist.

Von Vorteil ist dabei, dass durch das Verbindungselement mit den beweglich miteinander verbundenen Elementen die Anpassbarkeit an unterschiedlichste Raupenkettengeometrien verbessert ist, sodass die Steighilfe universeller eingesetzt werden kann. Durch die verbesserte Anpassbarkeit an die Geometrie der Raupenkette kann die Montage der Steighilfe auf der Raupenkette verbessert werden, sodass auf die Steighilfe höhere Kräfte übertragbar sind.

Bevorzugt ist gemäß einer Ausführungsvariante das Verbindungselement eine Kette ist oder umfasst dieses eine Kette. Es kann damit das Verbindungselemente einfach aufgebaut werden. Zudem ist es damit möglich, im Bedarfsfall nur einzelne Bestandteile der Kette zu ersetzen oder auszutauschen, sodass also nicht das gesamte Verbindungselemente im Falle einer Beschädigung ersetzt werden muss.

Nach einer anderen Ausführungsvariante ist es aber auch möglich, dass die beweglich miteinander verbundenen Elemente durch Kettenglieder oder Platten gebildet sind. Aufgrund des einfachen Aufbaus einer Kette mit Kettengliedern kann damit die Steighilfe konstruktiv einfach ausgestaltet werden, wobei die offene Ausführung der Elemente durch die Kettenglieder eine bessere Haftung in steilem Gelände ermöglicht, da durch das Eindringen des Bodens in die Kettenglieder eine Art zusätzlicher "Verkrallungseffekt" erreicht werden kann. Obwohl eine Plattenkette konstruktiv aufwändiger ist, hat diese Ausführungsvariante dennoch den Vorteil, dass auf den Platten weitere Bauelemente der Steighilfe angeordnet werden können.

So ist es beispielsweise gemäß einer Ausführungsvariante der Steighilfe möglich, auf den einzelnen Platten der Plattenkette zusätzlich Steighilfestollen anzuordnen, die wiederum eine Verbesserung des Halts einer (Bau)Maschine im steilen Geländer ermöglichen.

Nach einer weiteren Ausführungsvariante der Steifhilfe kann vorgesehen sein, dass das erste und das zweite Winkelelement jeweils mit einem Halteelement für das Verbindungselement verbunden sind. Es wird damit die Anordnung des Verbindungselementes auf den Halteelementen vereinfacht.

Von Vorteil ist dabei, wenn gemäß einer Ausführungsvariante dazu die Halteelemente verschwenkbar mit den Winkelelementen verbunden sind. Durch diese Schwenkbarkeit ist eine zusätzliche Anpassungsmöglichkeit der Steifhilfe an die Geometrie der Raupenkette erzielbar, sodass die Steighilfe auch bei größeren Versetzungen der Rillen zwischen den Stegen der Raupenkette einsetzbar ist.

Zur Vereinfachung der Montage des Verbindungselementes auf zumindest einem der Halteelemente kann nach einer weiteren Ausführungsvariante der Steighilfe vorgesehen sein, dass zumindest eines der Halteelemente eine Ausnehmung aufweist, in der das Verbindungselement aufgenommen ist, wobei die Ausnehmung breiter ist als die Dicke der Elemente des Verbindungselementes und kleiner ist als die Breite der Elemente des Verbindungselementes.

Weiter kann nach einer anderen Ausführungsvariante der Steighilfe vorgesehen sein, dass zumindest ein Halteelement ein Spannelement zum Spannen des Verbindungselementes aufweist. Mit dem Spannelement kann wiederum die Anbindung der Steighilfe an die Raupenkette verbessert werden.

Zum besseren Verständnis der Erfindung wird diese anhand der nachfolgenden Figur näher erläutert.

Es zeigt in vereinfachter, schematischer Darstellung:
- Fig. 1: die Steighilfe in Schrägansicht;
- Fig. 2: einen Ausschnitt aus einer Gummilaufkette in Draufsicht;
- Fig. 3: eine Ausführungsvariante eines Verbindungselementes in Draufsicht;
- Fig. 4: eine Ausführungsvariante einer Platte eines Verbindungselementes in Seitenansicht;
- Fig. 5: die Steighilfe nach Fig. 1 in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

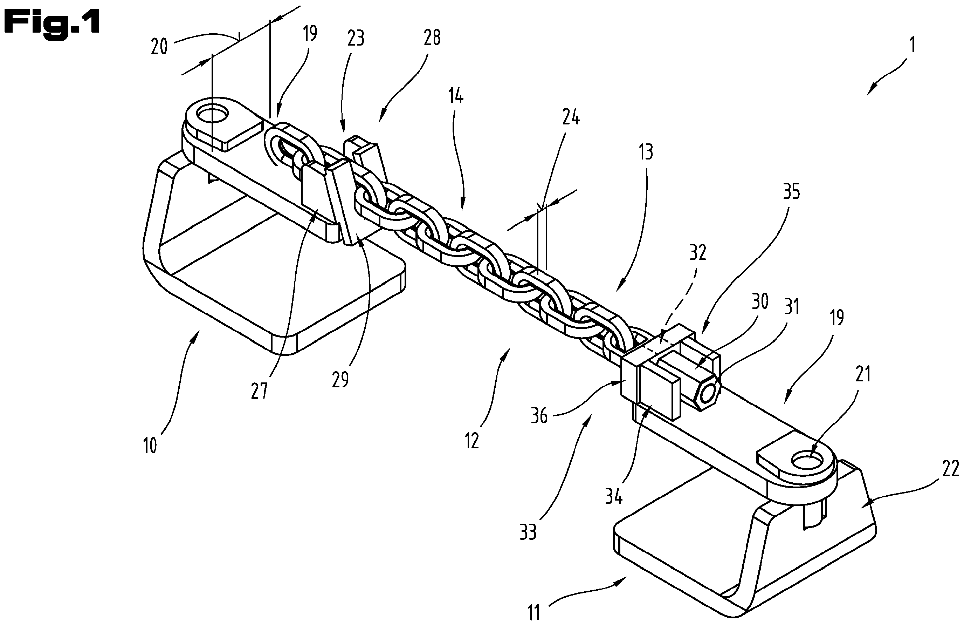

In Fig. 1 ist eine bevorzugte Ausführungsvariante einer Steighilfe 1 dargestellt.

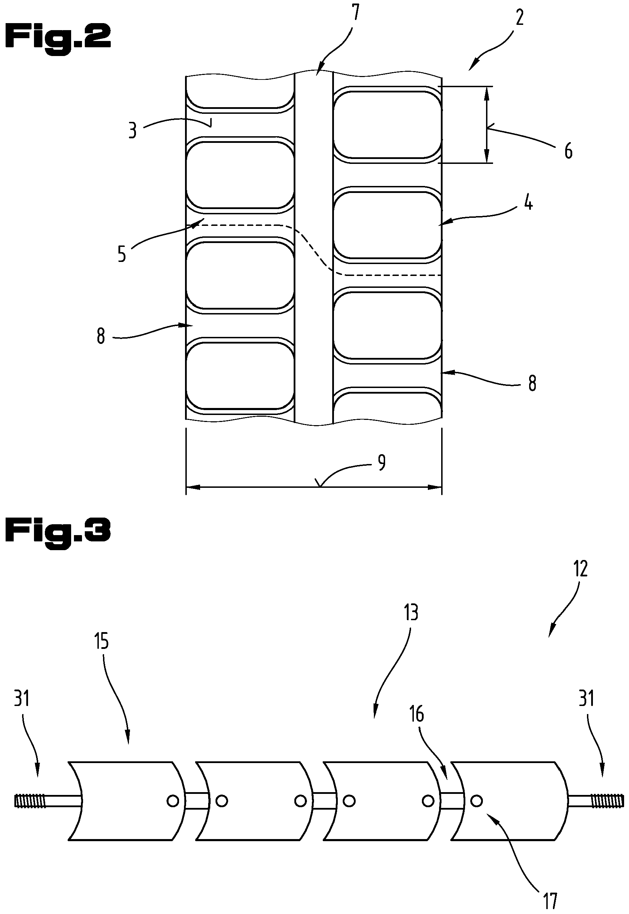

Die Steighilfe 1, auch als Gleitschutzvorrichtung bezeichenbar, ist für eine in Fig. 2 ausschnittsweise dargestellte Raupenkette 2 einer Maschine, wie beispielsweise einer Baumaschine, z.B. eines Baggers, oder einer Pistenraupe, vorgesehen. Es sei jedoch darauf hingewiesen, dass die in Fig. 2 dargestellte Raupenkette 2 in Form einer Gummilaufkette nur als Beispiel zu verstehen ist. Die Steighilfe 1 kann für anders ausgebildete Gummilaufketten oder auch für Raupenketten aus Metall verwendet werden, wenngleich die Verwendung an einer Gummilaufkette die bevorzugte Verwendung ist.

Gummilaufketten sind üblicherweise als endloses Band ausgeführt. An ihrer Oberseite 3 weisen sie eine Profilierung 4 mit Profilstollen 5 auf. Die Profilstollen 5 weisen eine Profilstollenlänge 6 auf. Mit dieser Profilierung 4wird die Bodenhaftung der Gummilaufkette verbessert. Die Profilierung 4 kann insbesondere auch zwei oder mehrreihig ausgeführt sein, wobei die Reihen mittels einer Längsrille 7 voneinander getrennt sind. Bei einer derartigen Ausführung können die Profilstolen 5 in Längsrichtung der Gummilaufkette versetzt angeordnet sein. Beispielsweise können die Profilstollen 5 einer Reihe um eine halbe Profilstollenlänge 6 versetzt sein, wie dies in Fig. 2 dargestellt ist. Nachdem zwischen den Profilstollen 5 Querrillen 8 ausgebildet sind, entsteht durch den Versatz der Profilstollen 5 ein Versatz im Verlauf der Querrillen 8 über die gesamte Breite 9 der Gummilaufkette, wie dies in Fig. 2 strichliert angedeutet ist.

Es sei darauf hingewiesen, dass die Profilierung 4 der Gummilaufkette auch anders ausgebildet sein kann. Beispielsweise können die Querrillen 8 der beiden Reihen von Profilstollen 5 auch zumindest annähernd eine V-Form ausbilden, bei der die Querrillen 8 von der Längsrille 7 aus nach außen hin in die gleiche Richtung geneigt verlaufen.

Die Querrillen 8 müssen auch nicht zwangsweise in der Längsrichtung der Gummilaufkette versetzt zueinander angeordnet sein, sondern können auch zumindest annähernd in einer Flucht angeordnet sein, sodass die Gesamtquerrille über die Breite 9 der Gummilaufkette linear verlaufend ausgebildet ist. Diese Gesamtquerrille kann in einem Winkel von zumindest annähern 90 ° zur Längsrichtung der Gummilaufkette oder in einem davon abweichenden Winkel verlaufen.

Weiter muss die Gummilaufkette nicht zwingend eine Längsrille 7 aufweisen bzw. können auch mehr als eine Längsrille 7 vorhanden sein.

Wie bereits erwähnt kann die Steighilfe 1 aber auch für eine Raupenkette 2 aus Metall verwendet werden. Derartige Raupenketten 2 weisen aus miteinander über Gelenkbolzen gelenkig verbundene Kettenglieder und auf diesen Kettengliedern aufgeschraubten Kettenplatten auf. Die Kettenplatten weisen an einer Oberseite, die mit dem Boden, auf dem die Maschine steht, in Berührung kommt, eine Profilierung mit Erhebungen auf, beispielsweise quer zur Kettenlängsrichtung verlaufende, vorstehende Stege. Die Profilierung kann aber auch anders ausgeführt sein, also auch hier einen nichtlinearen Verlauf der Rillen aufweisen.

Bei aufgeweichten oder gefrorenen Böden können Raupenketten 2 unter Umständen nur einen unzureichenden Halt aufweisen. Zur Verbesserung dieses Halts kann die Steighilfe 1 an der Raupenkette 2 montiert werden. Die Steighilfe 1 wird dazu zwischen zwei oder mehr Profilstollen 5 bzw. Erhebungen in den Querrillen 8 angeordnet, also beispielsweise mit dem in Fig. 2 strichliert dargestellten Verlauf.

Die Steighilfe 1 umfasst dazu ein erstes Winkelelement 10, ein zweites Winkelelement 11 und ein Verbindungselement 12 bzw. besteht aus diesen Bestandteilen. Das erste Winkelelement 10 ist mit dem Verbindungselement 12 mit dem zweiten Winkelelement 11 verbunden. Das Verbindungselement 12 umfasst beweglich miteinander verbundene Elemente 13 bzw. besteht daraus.

In der (bevorzugten) Ausführungsvariante der Steighilfe 1 nach Fig. 1 ist das Verbindungselement 12 als Kette ausgebildet bzw. umfasst eine Kette. Das Verbindungselement 12 kann aber auch anders ausgeführt sein, beispielsweise in Form eines oder mehrerer Gummielemente bzw. Elastomerelemente.

In der Ausführung des Verbindungselementes 12 als Kette können die beweglich miteinander verbundenen Elemente 13 durch ringförmige Kettenglieder 14 gebildet sein (Fig. 1), wobei jeweils ein Kettenglied 14 mit zwei weiteren Kettengliedern 14 verbunden ist, wie dies an sich bei Ketten bekannt ist.

Die Kettenglieder 14 können beispielsweise eine maximale Länge zwischen 3 cm und 10 cm und eine maximale Breite zwischen 2 cm und 8 cm aufweisen. Die Kettenglieder 14 können aber auch eine andere Größe aufweisen.

Wie in Fig. 3 dargestellt, kann das kettenförmige Verbindungselement 12 auch anders ausgeführt sein, insbesondere plattenkettenförmig mit miteinander verbundenen Platten 15, die die beweglich miteinander verbundenen Elemente 13 bilden. Die Platten 15 weisen insbesondere eine konvex und eine konkav gekrümmte Stirnfläche auf, wobei auf eine konvexe Stirnfläche einer Platte 15 eine konkave Stirnfläche einer unmittelbar daran schließenden Platte 15 folgt. Zur Verbindung der Platten 15 miteinander können unterhalb oder oberhalb der Platten 15 streifenförmige Verbindungselemente 16 vorgesehen sein, die mit Bolzen 17 gelenkig mit jeweils zwei Platten 15 verbunden sind. Es ist aber auch möglich, dass die Platten 15 direkt mit derartigen Bolzen 16 miteinander verbunden sind.

Weiter ist es möglich, dass unterhalb den Platten 16 eine weitere Kette angeordnet ist, auf der die Platten montiert sind.

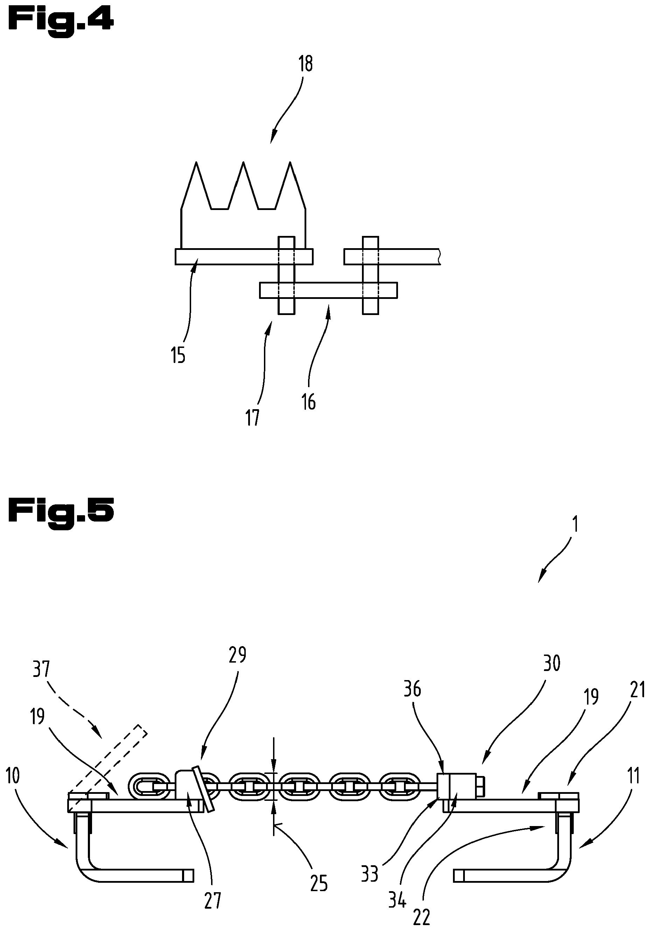

Gemäß einer Ausführungsvariante der Steighilfe 1 kann vorgesehen sein, dass auf den Platten 15 und über diese vorragend Steighilfeelemente, wie z.B. Steighilfestollen 18 oder Eiskrallen, etc., angeordnet sind, wie diese aus Fig. 4 ersichtlich ist. Diese Steighilfeelemente können aus einem Flachstahl gebildet und mit den Platten 15 verbunden sein, insbesondere stoffschlüssig verbunden sein, vorzugsweise verschweißt sein. Sie können aber auch auf den Verbindungselementen 16 für die Platten 15 angeordnet und damit verbunden sein, wenn diese die Platten 15 oben und nicht unten, wie dies in Fig. 3 und 4 dargestellt ist, verbinden. In diesem Fall können Steighilfeelemente auch zusätzlich auf den Platten 15 angeordnet sein. Die Steighilfeelemente können aber auch einteilig mit den Platten 15 und/oder den Verbindungselementen 16 ausgebildet sein.

Es sei an dieser Stelle erwähnt, dass die Steighilfe 1 bevorzugt zur Gänze aus einem oder mehreren metallischen Werkstoff(en) besteht.

Die beiden Winkelelemente 10, 11 können jeweils einteilig und U-förmig ausgebildet sein. Die Winkelelemente 10, 11 dienen dazu die Seitenbereiche der Raupenkette 2, an der die Steighilfe 1 angeordnet wird, umgreifend angeordnet zu werden; Um damit die Anbindung der Steighilfe 1 an die Raupenkette 2 zu erreichen.

Gemäß einer Ausführungsvariante der Steighilfe 1, die auch in Fig. 1 dargestellt ist, kann jedoch vorgesehen sein, dass das erste und das zweite Winkelelement 10, 11 jeweils mit einem Halteelement 19 für das Verbindungselement 12 verbunden sein, insbesondere stoffschlüssig verbunden sein, vorzugsweise verschweißt sein. Die Winkelelemente 10, 11 können in diesem Fall L-förmig ausgebildet sein, wie dies insbesondere auch aus Fig. 5 ersichtlich ist, die die Steighilfe nach Fig. 1 in Seitenansicht zeigt. Dies ermöglicht, eine Ausführung der Steighilfe 1, bei der die Halteelemente 19 mit einer geringeren Breite 20 (in Fahrtrichtung der Raupenkette 2 betrachtet) ausgeführt sind, als die beiden Winkelelemente 10, 11. Dies wiederum erlaubt die Steighilfe 1 mit einer größeren Auflagefläche im Bereich der Anlage an die Raupenkette 2 auszubilden, wobei über die schmäleren Halteelemente 19 eine entsprechend gute Anpassung an die Querrillen 8 der Raupenkette 2 zwischen den Profilstollen 5 ermöglicht wird. Es kann damit eine verbesserte Anbindung der Steighilfe 1 an die Raupenkette 2 ermöglicht werden.

Es kann aber auch bei dieser Ausführungsvariante der Steighilfe 1 vorgesehen sein, dass die Winkelelemente 10 bzw. 11 mit dem jeweiligen Halteelement 19 einteilig ausgebildet sind.

Gemäß einer bevorzugten Ausführungsvariante der Steighilfe 1 sind die Halteelemente 19 aber verschwenkbar mit den jeweiligen Winkelelement 10, 11 verbunden. Die Verbindung kann insbesondere mit Bolzen 21 hergestellt sein, die durch die Haltelemente 19 hindurchragend und in Aufnahmen 22 in den Winkelelementen 10, 11 hineinragend angeordnet sind. Die Bolzen 21 weisen einen Bolzenkopf auf, der einen größeren Durchmesser aufweist, als die Durchbrüche durch die Halteelemente 19. Die Bolzen 21 können gegebenenfalls als Gewindebolzen ausgeführt sein, die nur im unteren Teil ihres Schaftes mit einem Gewinde versehen sind. Durch die Verschwenkbarkeit der Halteelemente 19 kann eine bessere Anpassung der Steighilfe 1 an den Verlauf der Querrillen 8 der Raupenkette 2 erreicht werden.

Das Verbindungselement 12 ist mit den beiden Winkelelementen 10, 11 oder mit den Haltelementen 19 verbunden. Dazu kann das Verbindungselement 12 mit den beiden Winkelelementen 10, 11 oder mit den Haltelementen 19 verschweißt sein. Um der Steighilfe 1 jedoch eine Längenvariabilität und eine bessere Anpassung an die Profilierung 4 der Raupenkette zu verleihen, kann nach einer Ausführungsvariante der Steighilfe 1 bevorzugt vorgesehen sein, dass zumindest eines der Halteelemente eine Ausnehmung 23 (Durchbruch) aufweist, in der das Verbindungselement 12 aufgenommen ist, wobei die Ausnehmung 23 breiter ist als eine Dicke 24 der Elemente 13 des Verbindungselementes 12 und kleiner ist als die Breite 25 (Fig. 5) der Elemente 13 des Verbindungselementes 12. Diese Ausführungsvariante ist insbesondere aus Fig. 1 anhand des Aufbaus der Steighilfe 1 im Bereich des ersten (linken) Winkelelementes 10 zu ersehen. Es sei jedoch darauf hingewiesen, dass die Steighilfe 1 auch umgedreht werden kann, und damit das linke Winkelelement 10 zum rechten Winkelelement 11 wird. Die Ausnehmung 23 ist vorzugsweise in einer Halterung 26 angeordnet, die auf dem Halteelement 19 angeordnet und damit verbunden ist, insbesondere stoffschlüssig verbunden ist, vorzugsweise verschweißt ist. Die Halterung 26 kann aus einem ersten und einem zweiten Profil 27, 28 und einem dazwischen angeordneten und mit den Profilen 27, 18 verbundenen, insbesondere verschweißten, Querprofil 29 bestehen bzw. diese umfassen. Die Profile 27, 28 und das Querprofil 29 können aus Flachstahlprofilen hergestellt sein. Die beiden Profile 27, 28 sind insbesondere in einem Abstand zueinander angeordnet, der größer ist, also die Breite 25 der Elemente 13 des Verbindungselementes 12. Das Verbindungselement 12 ist lösbar mit der Halterung 26 verbunden, insbesondere nur eingehängt. Für das Einhängen kann die Halterung 26 oder das Halteelement 19 bzw. das Winkelelement 10 gegebenenfalls auch einen Haken aufweisen.

Die Ausnehmung 23 für die Aufnahme und Durchführung des Verbindungselementes 12 ist bevorzugt schlitzförmig ausgeführt und insbesondere im Querprofil angeordnet. Damit wird es möglich, ein Element 13 des Verbindungselementes 12, insbesondere ein Kettenglied 14, stehend von oben in dies Ausnehmung 23 einzuführen. Nachdem die Breite der Ausnehmung 23 kleiner ist als die Breite 25 der Elemente 13 und nachdem bei einer Gliederkette mit in den Fig. 1 und 5 dargestellten Kettengliedern 14 das mit dem in der Ausnehmung 23 aufgenommene Kettenlied 14 unmittelbar verbundene Kettenglied 14 um eine Winkelwert verdreht ist, beispielsweise um ca. 90 °, kann dieses letztgenannte Kettenglied 14 nicht durch die Ausnehmung 23 hindurch gleiten.

In der bevorzugten und in den Fig. 1 und 5 dargestellten Ausführungsvariante der Steighilfe 1 ist das Querprofil 29 schräg angeordnet. Dazu schließt das Querprofil 29 mit dem Halteelement 19 bzw. dem Winkelelement 10 einen Winkel von ungleich 90 ° ein. Beispielsweise kann dieser Winkel zwischen 30 ° und 80 ° betragen.

Um eine bessere Anbindung der Steighilfe 1 an die Raupenkette 2 zu ermöglichen, kann nach einer weiteren Ausführungsvariante der Steighilfe 1 vorgesehen sein, dass zumindest eines der Halteelement 19 ein Spannelement 30 zum Spannen des Verbindungselementes 12 aufweist.

Das Spannelement 30 kann einfachsten Fall eine Schraubmutter sein. In diesem Fall ist ein Ende des Verbindungselementes 12 mit einer Schraubgewinde 31 ausgebildet, wie dies insbesondere auch bei der Ausführungsvariante des Verbindungselementes 12 nach Fig. 3 zu ersehen ist, wobei bei dieser Ausführungsvariante beide Enden des Verbindungselementes 1 mit einem derartigen Schraubgewinde 31 versehen ist, und demgemäß die Steighilfe zwei Spannelement 30 aufweist. Dies kann generell im Rahmen der Erfindung vorgesehen sein, also auch bei der in den Fig. 1 und 5 dargestellten Ausführungsvariante der Steighilfe 1. Demzufolge kann auf die voranstehend beschriebene Klemmverbindung des Verbindungselementes 12 in der Halterung 26 auch verzichtet werden.

Zum Spannen kann des Verbindungselementes 12 kann die Gewindestange mit dem Schaubgewinde 31 ebenfalls durch eine Ausnehmung 32 (Durchbruch) hindurchgeführt sein. Die Ausnehmung 32 ist insbesondere als Bohrung ausgeführt und allseitig geschlossen, kann aber auch schlitzförmig ausgeführt sein. Die Ausnehmung 32 ist vorzugsweise in einer Halterung 33 angeordnet, die auf dem Halteelement 19 angeordnet und damit verbunden ist, insbesondere stoffschlüssig verbunden ist, vorzugsweise verschweißt ist. Die Halterung 33 kann aus einem ersten und einem zweiten Profil 34, 35 und einem dazwischen angeordneten und mit den Profilen 34, 35 verbundenen, insbesondere verschweißten, Querprofil 36 bestehen bzw. diese umfassen. Die Profile 34, 35 und das Querprofil 36 können aus Flachstahlprofilen hergestellt sein. Die Ausnehmung 32 ist insbesondere im Querprofil 36 ausgebildet. Insbesondere weist sie einen Durchmesser auf, der kleiner als der Außendurchmesser des Spannelementes 30 ist, sodass sich das Spannelement 30 an dem Querprofil 36 abstützen kann.

Für den Fall, dass das Verbindungselement 12 mit zwei Schraubgewinden 31 versehen ist, können beide Spannelemente 30 gleich ausgeführt sein. Es ist jedoch in diesem Fall auch möglich, die voranstehend beschriebene Ausnehmung 23 als Bohrung mit einem Innengewinde auszuführen, womit gegebenenfalls auf ein zweites Spannelement 30 verzichtet werden kann.

Das Spannelement 30 kann auch anders ausgeführt sein, beispielsweise als Schnellspannverschluss, der gegebenenfalls ein Sicherungselement aufweist, mit dem das ungewollte Öffnen des Schnellspannverschlusses verhindert werden kann. Bei dieser Ausführungsvariante der Steighilfe 1 kann die Ausnehmung 32 in der Halterung 33 ebenfalls schlitzförmig ausgebildet sein.

Das Querprofil 36 der Halterung 33 kann in einem Winkel von 90 ° oder in einem Winkel von kleiner 90 ° zum Halteelement 19 bzw. dem (in Fig. 1 rechten) Winkelelement 11 angeordnet sein.

Mit dem Spannelement 30 kann auch die andere Seite des Verbindungselementes 12 lösbar mit Halterung 33 verbunden werden.

Der Vollständigkeit halber sei darauf hingewiesen, dass das Verbindungselement 12 beidseitig mit den voranstehend beschriebenen Klemmverbindungen mit den Winkelelementen 10, 11 verbunden sein kann. In diesem Fall kann ein zusätzliches Spannelement angeordnet sein, um das Spannen des Verbindungselementes 12 zu erreichen.

Die beiden Winkelelemente 10, 11 sind vorzugsweise aus einem Flachstahl durch entsprechendes Umformen hergestellt, können zumindest teilweise aber auch nach einem anderen Verfahren, z.B. einem Gussverfahren, hergestellt worden sein.

Es sei darauf hingewiesen, dass die in den Figuren dargestellte Form der Steighilfe 1 keinen einschränkenden Charakter hat.

Des Weiteren sei der Vollständigkeit halber erwähnt, dass an der Raupenkette übelicherweise mehr als eine Steighilfe 1 montiert wird. Da vorzugsweise alle Steighilfen 1 gleich ausgebildet sind, wird in dieser Beschreibung nur eine Steighilfe 1 beschrieben. Diese Ausführungen können aber auch auf die weiteren Steighilfen 1 der Raupenkette angewandt werden.

Zur Montage der Steighilfe 1 können zunächst die beiden Winkelelemente 10, 11 (die gegebenenfalls die Halteelemente 19 aufweisen) von gegenüberliegenden Seiten auf die Seitenränder der Raupenkette 1 zwischen zwei benachbarten Erhebungen der Profilierung 4 aufgeschoben und dann das Verbindungselement 12 gespannt werden.

Es ist weiter möglich, in den Seitenbereichen der Steighilfe 1 plattenförmige Schutzelemente 37 anzuordnen und mit den Winkelelemente 10, 11 und/oder den Halteelementen 19 zu verbinden, wie dies beispielsweise aus Fig. 5 für die linke Seite des Steighilfe 1 strichliert ersichtlich ist. Diese Schutzelemente 37 können beispielsweise eine trapezförmig ausgebildet sein.

Die Ausführungsbeispiele zeigen bzw. beschreiben mögliche Ausführungsvarianten der Steighilfe 1, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus der Steighilfe 1diese bzw. deren Bestandteile nicht zwingenderweise maßstäblich dargestellt sind.

**Bezugszeichenaufstellung**

| | | | |
|---|---|---|---|
| | | 36 | Querprofil |
| 1 | Steighilfe | 37 | Schutzelement |
| 2 | Raupenkette | | |
| 3 | Oberseite | | |
| 4 | Profilierung | | |
| 5 | Profilstollen | | |
| | | | |
| 6 | Profilstollenlänge | | |
| 7 | Längsrille | | |
| 8 | Querrille | | |
| 9 | Breite | | |
| 10 | Winkelelement | | |
| | | | |
| 11 | Winkelelement | | |
| 12 | Verbindungelement | | |
| 13 | Element | | |
| 14 | Kettenglied | | |
| 15 | Platte | | |
| | | | |
| 16 | Verbindungselement | | |
| 17 | Bolzen | | |
| 18 | Steighilfestollen | | |
| 19 | Halteelement | | |
| 20 | Breite | | |
| | | | |
| 21 | Bolzen | | |
| 22 | Aufnahme | | |
| 23 | Ausnehmung | | |
| 24 | Dicke | | |
| 25 | Breite | | |
| | | | |
| 26 | Halterung | | |
| 27 | Profil | | |
| 28 | Profil | | |
| 29 | Querprofil | | |
| 30 | Spannelement | | |
| | | | |
| 31 | Schraubgewinde | | |
| 32 | Ausnehmung | | |
| 33 | Halterung | | |
| 34 | Profil | | |
| 35 | Profil | | |

## Patentansprüche

1. Steighilfe (1) für eine Maschine mit einer Raupenkette (2), umfassend ein erstes und ein zweites Winkelelement (10, 11), wobei die beiden Winkelelemente (10, 11) mit einem Verbindungselement (12) miteinander verbunden sind, **dadurch gekennzeichnet, dass** das Verbindungselement (12) beweglich miteinander verbundene Elemente (13) umfasst oder daraus besteht.

2. Steighilfe (1) nach Anspruch 1, **dadurch gekennzeichnet, dass** das Verbindungselement (12) eine Kette ist oder eine Kette umfasst.

3. Steighilfe (1) nach Anspruch 2, **dadurch gekennzeichnet, dass** die beweglich miteinander verbundenen Elemente (13) durch Kettenglieder (14) oder Platten (15) gebildet sind.

4. Steighilfe (1) nach Anspruch 3, **dadurch gekennzeichnet, dass** auf den Platten (15) über diese vorragend Steighilfestollen (18) oder Eiskrallen angeordnet sind.

5. Steighilfe (1) nach einem der Ansprüche 1 bis 4, **dadurch gekennzeichnet, dass** das erste und das zweite Winkelelement (10, 11) jeweils mit einem Halteelement (19) für das Verbindungselement (12) verbunden sind.

6. Steighilfe (1) nach Anspruch 5, **dadurch gekennzeichnet, dass** die Halteelemente (19) verschwenkbar mit den Winkelelementen (10, 11) verbunden sind.

7. Steighilfe (1) nach einem der Ansprüche 1 bis 6, **dadurch gekennzeichnet, dass** zumindest eines der Halteelemente (19) eine Ausnehmung (23) aufweist, in der das Verbindungselement (12) aufgenommen ist, wobei die Ausnehmung (23) breiter ist als eine Dicke (24) der Elemente (13) des Verbindungselementes (12) und kleiner ist als eine Breite (25) der Elemente des Verbindungselementes (12).

8. Steighilfe (1) nach einem der Ansprüche 1 bis 7, **dadurch gekennzeichnet, dass** zumindest ein Halteelement (19) ein Spannelement (30) zum Spannen des Verbindungselementes (12) aufweist.

9. Raupenkette (2) für eine Maschine, die eine Oberseite aufweist, wobei die Oberseite eine Profilierung (4) mit Erhebungen aufweist, sowie mit zumindest einer Steighilfe (1), die zwischen zwei Erhebungen der Profilierung (4) der Oberseite angeordnet ist, **dadurch gekennzeichnet, dass** die Steighilfe (1) nach einem der Ansprüche 1 bis 8 gebildet ist.
